# EUROPÄISCHE PATENTSCHRIFT

(11) **EP 2 413 117 B1**
(45) Veröffentlichungstag und Bekanntmachung des Hinweises auf die Patenterteilung: **09.11.2016**
(21) Anmeldenummer: 11175920.5
(22) Anmeldetag: 29.07.2011
(51) Int. Cl.: G01K 1/14, G01K 13/02

(54) **Verfahren und Messanordnung zur Temperaturmessung und Verfahren zum Betrieb der Messanordnung**
Method and measurement assembly for temperature measurement and method for operating the measurement assembly
Procédé et agencement de mesure destiné à la mesure de la température et procédé de fonctionnement de l'agencement de mesure

(30) Priorität: 29.07.2010 DE 102010032614
(43) Veröffentlichungstag der Anmeldung: 01.02.2012
(73) Patentinhaber: QUNDIS GmbH, 99098 Erfurt (DE)
(72) Erfinder: Oesterle, Alexander, 78739 Hardt (DE); Mattes, Rolf, 78112 St. Georgen (DE)
(74) Vertreter: Liedtke, Markus

(56) Entgegenhaltungen:
- DE-A1- 3 500 539
- DE-U1- 8 631 832
- US-A1- 2006 045 164

## Beschreibung

Die Erfindung betrifft ein Verfahren zur Temperaturmessung und eine Vorrichtung zur Temperaturmessung nach den Merkmalen des Oberbegriffs des Anspruchs 8.

Aus dem Stand der Technik sind Temperatursensoren zur Temperaturmessung bekannt, welche in einer Tauchhülse angeordnet sind. Die Tauchhülse ist in ein Medium, dessen Temperatur zu messen ist, eingetaucht.

In der DE 32 18 327 A1 sind ein Mehrfachsonden-Temperaturmesssystem sowie eine Sonde hierfür bekannt. Der Platin-Widerstandsfühler einer Temperaturmessungsoberflachensonde weist einen Widerstandswert auf, der größer ist als der Widerstandswert, auf den das zugeordnete Messinstrument geeicht ist. Dadurch wird eine Kompensation geschaffen, die eine Funktion der Temperatur ist, und es werden Fehler vermindert, die auf Wärmeverlusten der Sonde beruhen. Eine Tauchsonde, die keinen Wärmeverlust aufweist, kann auswechselbar mit dem gleichen Messgerät dadurch benutzt werden. dass in die Schaltungen der beiden Sonden ein ausreichender fester Widerstandswert eingefügt wird, um gleiche Widerstandsausgangswerte an das Messinstrument sowohl von der verlustfreien Sonde als auch von der verlustbehafteten Sande abzugeben, wobei das Messinstrument auf eine Standard-Widerstandskurve geeicht ist.

Aus der DE 1 834 764 U ist ein Thermoelement bekannt. Das Thermoelement zur Messung der Temperatur sich bewegender gasförmiger Medien umfasst zwei Schenkel aus unterschiedlichen Metallen, die axial durch eine Hülle laufen und auf das eine Ende der Hülle zu in einer Lötstelle endigen, und des Weiteren einen im Gehäuse befindlichen Kern aus einem isolierenden Material, das die Leitungen des Thermoelementes von der Hülle trennt, wobei sich die Lötstelle des Thermoelementes über das isolierende Material hinaus erstreckt. In der Hülle des Thermoelementes sind neben der Lötstelle zwei diametral gegenübergelegene Öffnungen ausgebildet, durch die das sich bewegende und zu messende gasförmige Medium in die Hülle eintritt und an der Lötstelle vorbeiströmt. Die Öffnungen weisen eine im Wesentlichen rechteckige Form mit abgerundeten Enden auf und erstrecken sich in Achsenrichtung längs der Hülle. Zudem ist ein Körper vorgesehen, der vom Umfang in Richtung auf den mittleren Bereich mindestens einer Öffnung läuft. Des Weiteren ist ein Abschlusskörper quer zur Achse der Hülle angeordnet und schließt diese ab, so dass eine Kammer rund um die Lötstelle des Thermoelementes zusammen mit der Hülle zur weiteren Steigerung der Turbulenz gebildet ist.

In der EP 0 110 898 B1 wird ein System zum wahlweisen Messen einer aus einer Mehrzahl von gesonderten physikalischen Variablen beschrieben. Das System umfasst eine Mehrzahl von Wandlermitteln, die jeweils zur Beobachtung einer gesonderten physikalischen Variablen und zur Erzeugung eines dieser entsprechenden Signals eingerichtet sind, wobei sich das Signal von einer gewünschten Beziehung zu der physikalischen Variablen in einer vorgegebenen Weise unterscheidet. Des Weiteren umfasst das System eine Mehrzahl von Kennzeichnungsmitteln, die jeweils einem gesonderten Wandlermittel zugehörig sind und den Unterschied zwischen dem von dem Wandlermittel erzeugten Signal und einer gewünschten Beziehung zu der physikalischen Variablen kennzeichnen, und Korrekturmittel, die wahlweise auf ein individuelles Wandlermittel und den diesen zugehörigen Kennzeichnungsmitteln zur Justierung des Wandlermittelssignals in einer vorgegebenen Weise ansprechen, um eine korrigierte Messung der entsprechenden physikalischen Variablen zu erzeugen.

Aus der DE 86 31 832 U1 ist eine Tauchhülse mit einem Thermofühler für Messstellen in Heizungsanlagen bekannt. Die Tauchhülse besteht aus einem Kopfstück mit einem am unteren Ende verschlossenen Tauchrohr, in dem der Fühler mit Kabelzuführungen angeordnet ist. Am Kopfstück ist ein Haltestab und an diesem ein sich längs im Tauchrohr erstreckendes Federblatt angeordnet, zwischen dem und der Tauchrohrinnenwand der mindestens eine Fühler verspannt angeordnet ist.

In der US 2006/0045164 A1 sind ein System und ein Verfahren zur Kompensation von durch Vorrichtungseinbau und Wärmeübertragung bedingten Fehlern bekannt. Ein thermisches Sensorsystem umfasst einen Sensor zum Messen einer Temperatur in einer Nutzerumgebung, der ein die vom Sensor gemessene Temperatur anzeigendes Sensorsignal liefert, und einen mit dem Sensor verknüpften Wärmetransfereintrag zum Bereitstellen von Wärmetransferparametern zum Kompensieren der vom Sensor gemessenen Temperatur als Funktion des Wärmetransfers zwischen dem Sensor und der Nutzerumgebung. Die Wärmetransferparameter sind mit einer vorgegebenen Wärmetransferinformation zum Charakterisieren eines Transfers von Wärmeenergie zwischen dem Sensor und der Nutzerumgebung verknüpft.

Der Erfindung liegt die Aufgabe zugrunde, ein verbessertes Verfahren zur Temperaturmessung und eine verbesserte Vorrichtung zur Temperaturmessung anzugeben.

Die Aufgabe wird erfindungsgemäß gelöst durch ein Verfahren zur Temperaturmessung mit den Merkmalen des Anspruchs 1und eine Vorrichtung zur Temperaturmessung mit den Merkmalen des Anspruchs 8.

Vorteilhafte Ausgestaltungen der Erfindung sind Gegenstand der Unteransprüche.

In einem erfindungsgemäßen Verfahren zur Temperaturmessung mittels einer Vorrichtung mit zumindest einem Temperatursensor wird der Temperatursensor indirekt über eine Tauchhülse oder direkt in ein Medium, dessen Temperatur zu messen ist, eingetaucht, wobei bei Verwendung der Tauchhülse ein durch die Tauchhülse während der Temperaturmessung verursachter Messfehler über eine in der Vorrichtung gespeicherte Korrekturkennlinie korrigiert wird. Dabei ist die Tauchhülse als ein fest installierter Bestandteil einer bereits bestehenden Messstelle in einem bereits bestehenden Heizkreislauf einer Heizung oder in einem bereits bestehenden Kühlkreislauf einer Klimaanlage angeordnet, d. h. die Tauchhülse ist ein fester Bestandteil des bereits bestehenden Heizkreislaufs der Heizung bzw. des bereits bestehenden Kühlkreislaufs der Klimaanlage und fest in diesem installiert. Durch ein Entfernen der Tauchhülse aus dem Heizkreislauf der Heizung bzw. aus dem Kühlkreislauf der Klimaanlage würde eine Öffnung in dem jeweiligen Kreislauf entstehen, durch welche hindurch das Medium aus dem jeweiligen Kreislauf entweichen würde. Die Tauchhülse ist somit ein Bestandteil des Heizkreislaufs oder Kühlkreislaufs und kein Bestandteil der Vorrichtung, sondern ein Bestandteil einer Messanordnung, welche die Vorrichtung und die Tauchhülse umfasst und welche durch das Eintauchen des Temperatursensors indirekt über die Tauchhülse in das Medium oder direkt in das Medium ausgebildet wird.

Das Verfahren ist beispielsweise in einem Wärmemengenzähler, d. h. in einem so genannten Wärmezähler oder Kältezähler verwendbar. Wärmezähler sind beispielsweise in einem Heizkreislauf einer Heizung installiert, um einen Wärmemengenverbrauch zum Beispiel zu Abrechnungszwecken zu ermitteln. Kältezähler sind beispielsweise in einem Kühlkreislauf einer Klimaanlage installiert, um einen negativen Wärmemengenverbrauch, d. h. einen Kühlmengenverbrauch zum Beispiel zu Abrechnungszwecken zu ermitteln.

Das Verfahren ist jedoch auch zur Temperaturmessung von anderen Medien geeignet, welche sich in einer Rohrleitung oder in einem Behälter mit zumindest einer fest installierten Tauchhülse befinden.

Durch die Korrekturkennlinie wird der durch die Tauchhülse verursachte Messfehler, der so genannte Wärme-Ableit-Fehler oder Temperatur-Ableit-Fehler korrigiert, so dass eine exakte Temperaturmessung ermöglicht wird und dadurch eine Messgenauigkeit des Wärmezählers oder Kältezählers verbessert wird. Auf diese Weise sind die fest im Heizkreislauf oder Kühlkreislauf installierten Tauchhülsen weiterhin verwendbar und es müssen beispielsweise bereits bestehende Messstellen im jeweiligen Heizkreislauf oder Kühlkreislauf nicht umgerüstet werden. Das Verfahren ermöglicht somit eine umweltfreundliche und kostengünstige Lösung, um korrekte Temperaturmessungen sicherzustellen. Eine Veränderung am Heizkreislauf oder Kühlkreislauf selbst ist auf diese Weise nicht erforderlich. D. h., da die fest installierten Tauchhülsen, welche fester Bestandteil des bereits bestehenden Heizkreislaufs oder Kühlkreislaus sind, weiterhin verwendbar sind und nicht ausgetauscht werden müssen, ist es beispielsweise nicht erforderlich, den Heizkreislauf oder Kühlkreislauf zu entleeren, um die Tauchhülsen ohne ein Ausströmen des Mediums aus diesem entfernen zu können, und den Heizkreislauf oder Kühlkreislauf aufwändig und kostenintensiv umzubauen, um eine Temperaturmessung ohne Tauchhülsen zu ermöglichen.

Der Messfehler resultiert beispielsweise aus einer Wärmeableitung vom Temperatursensor weg durch das Material der Tauchhülse. Daher ist die Korrekturkennlinie, welche linear oder nicht linear verlaufen kann, auf die jeweilige in Verbindung mit der Vorrichtung zu verwendende Tauchhülse abzustimmen und in der Vorrichtung abzuspeichern, um im Verfahren verwendet werden zu können.

Zweckmäßigerweise wird bei einer Direktmessung mittels des direkt in das Medium eingetauchten Temperatursensors keine Korrekturkennlinie verwendet, da bei der Direktmessung der Messfehler, da keine Tauchhülse verwendet wird, nicht auftritt.

Alternativ kann auch bei der Direktmessung eine entsprechende für die Direktmessung vorgesehene Korrekturkennlinie verwendet werden. Auf diese Weise ist beispielsweise ein Messfehler korrigierbar, welcher durch eine Temperaturableitung eines Kugelhahns oder eines Volumenmessteils des Wärmemengenzählers verursacht wird. Bei Wärmemengenzählern, welche eine derartige Direktmessung ermöglichen, d. h. ohne Tauchhülsen, ist beispielsweise ein Temperatursensor in einem Kugelhahn angeordnet, welcher in einem Vorlauf des Heizkreislaufs oder Kühlkreislaufs installiert ist und ein weiterer Temperatursensor ist in einem Gehäuse des Volumenmessteils des Wärmemengenzählers angeordnet. Mittels des Volumenmessteils wird eine Durchflussmenge des Medium bestimmt.

Bei dieser Anordnung können beispielsweise Messfehler aufgrund eines sehr unterschiedlichen mechanischen Umfeldes der beiden Temperatursensoren auftreten, welche mit entsprechenden Korrekturkennlinien zu korrigieren sind. Der Kugelhahn verursacht beispielsweise aufgrund einer geringen Masse einen kleinen Wärme-Ableit-Fehler, während das Gehäuse des Volumenmessteils aufgrund einer großen Masse einen entsprechend größeren Wärme-Ableit-Fehler verursacht. Durch eine derartige Korrekturkennlinie auch für die Direktmessung ist auch bei einer Direktmessung eine Genauigkeit der Temperaturmessung verbessert.

Eine erfindungsgemäße Vorrichtung zur Temperaturmessung umfasst zumindest einen Temperatursensor.

Der Temperatursensor ist indirekt über eine Tauchhülse oder direkt in ein Medium, dessen Temperatur zu messen ist, eintauchbar oder eingetaucht und in einer Speichereinheit der Vorrichtung ist zumindest eine Korrekturkennlinie gespeichert, mittels welcher bei Verwendung einer Tauchhülse ein durch die Tauchhülse während der Temperaturmessung verursachter Messfehler korrigierbar ist. Dabei ist die Tauchhülse als ein fest installierter Bestandteil einer bereits bestehenden Messstelle in einem bereits bestehenden Heizkreislauf einer Heizung oder in einem bereits bestehenden Kühlkreislauf einer Klimaanlage angeordnet, d. h. die Tauchhülse ist ein fester Bestandteil des bereits bestehenden Heizkreislaufs der Heizung bzw. des bereits bestehenden Kühlkreislaufs der Klimaanlage und fest in diesem installiert. Durch ein Entfernen der Tauchhülse aus dem Heizkreislauf der Heizung bzw. aus dem Kühlkreislauf der Klimaanlage würde eine Öffnung in dem jeweiligen Kreislauf entstehen, durch welche hindurch das Medium aus dem jeweiligen Kreislauf entweichen würde. Die Tauchhülse ist somit ein Bestandteil des Heizkreislaufs oder Kühlkreislaufs und kein Bestandteil der Vorrichtung, sondern Bestandteil der Messanordnung, welche die Tauchhülse umfasst.

Da bei einer Direktmessung, d. h. bei einem direkt in das Medium eingetauchten Temperatursensor aufgrund der nicht vorhandenen Tauchhülse kein von dieser verursachter Messfehler auftritt, ist die Temperatur in diesem Fall mittels der Vorrichtung direkt und ohne Verwendung einer Korrekturkennlinie messbar und verarbeitbar. Zu diesem Zweck ist für den Temperatursensor an der Vorrichtung eine Direktmessung einstellbar.

Durch die Korrekturkennlinie ist der durch die Tauchhülse verursachte Messfehler, der so genannte Wärme-Ableit-Fehler oder Temperatur-Ableit-Fehler korrigierbar, so dass eine exakte Temperaturmessung ermöglicht ist. Auf diese Weise sind die fest im Heizkreislauf oder Kühlkreislauf installierten Tauchhülsen weiterhin verwendbar und es sind beispielsweise bereits bestehende Messstellen im jeweiligen Heizkreislauf oder Kühlkreislauf nicht umzurüsten. Die Vorrichtung ermöglicht somit eine umweltfreundliche und kostengünstige Lösung, um korrekte Temperaturmessungen sicherzustellen. Eine Veränderung am Heizkreislauf oder Kühlkreislauf selbst ist auf diese Weise nicht erforderlich. D. h., da die fest installierten Tauchhülsen, welche fester Bestandteil des bereits bestehenden Heizkreislaufs oder Kühlkreislaus sind, weiterhin verwendbar sind und nicht ausgetauscht werden müssen, ist es beispielsweise nicht erforderlich, den Heizkreislauf oder Kühlkreislauf zu entleeren, um die Tauchhülsen ohne ein Ausströmen des Mediums aus diesem entfernen zu können, und den Heizkreislauf oder Kühlkreislauf aufwändig und kostenintensiv umzubauen, um eine Temperaturmessung ohne Tauchhülsen zu ermöglichen.

Der Messfehler resultiert beispielsweise aus einer Temperaturableitung vom Temperatursensor weg durch das Material der Tauchhülse. Daher ist die Korrekturkennlinie, welche linear oder nicht linear verlaufen kann, auf die jeweilige in Verbindung mit der Vorrichtung zu verwendende Tauchhülse abzustimmen und in der Vorrichtung abzuspeichern.

Alternativ kann zusätzlich auch für die Direktmessung in der Speichereinheit eine entsprechende Korrekturkennlinie gespeichert sein, mittels welcher ein während der Temperaturmessung auch bei der Direktmessung auftretender Messfehler korrigierbar ist. Auf diese Weise ist beispielsweise ein Messfehler korrigierbar, welcher durch eine Temperaturableitung eines Kugelhahns oder eines Volumenmessteils eines Wärmemengenzählers verursacht wird. Bei Wärmemengenzählern, welche eine derartige Direktmessung ermöglichen, d. h. ohne Tauchhülsen, ist beispielsweise ein Temperatursensor in einem Kugelhahn angeordnet, welcher in einem Vorlauf eines Heizkreislaufs oder Kühlkreislaufs installiert ist und ein weiterer Temperatursensor ist in einem Gehäuse des Volumenmessteils des Wärmemengenzählers angeordnet. Mittels des Volumenmessteils ist eine Durchflussmenge des Medium bestimmbar.

Bei dieser Anordnung können beispielsweise Messfehler aufgrund eines sehr unterschiedlichen mechanischen Umfeldes der beiden Temperatursensoren auftreten, welche mit entsprechenden Korrekturkennlinien zu korrigieren sind. Der Kugelhahn verursacht beispielsweise aufgrund einer geringen Masse einen kleinen Wärme-Ableit-Fehler, während das Gehäuse des Volumenmessteils aufgrund einer großen Masse einen entsprechend größeren Wärme-Ableit-Fehler verursacht. Durch eine derartige Korrekturkennlinie auch für die Direktmessung ist auch bei einer Direktmessung eine Genauigkeit der Temperaturmessung verbessert.

Wie an diesem Beispiel verdeutlicht, kann die Vorrichtung auch eine Mehrzahl von Temperatursensoren aufweisen, wobei dann für jeden der Temperatursensoren jeweils eine Korrekturkennlinie auswählbar ist, entsprechend der jeweiligen für den Temperatursensor verwendeten Tauchhülse, d. h. entsprechend der jeweiligen Tauchhülse, welche als fester Bestandteil des jeweiligen Heizkreislaufs oder Kühlkreislaufs fest in diesem installiert ist und in welcher der jeweilige Temperatursensor anzuordnen oder angeordnet ist, um die Temperatur des den Heizkreislauf oder Kühlkreislauf durchströmenden Mediums zu ermitteln. Des Weiteren ist auch für jeden der Temperatursensoren die Direktmessung auswählbar, so dass jeder der Temperatursensoren auch direkt in das Medium einsetzbar ist, wenn eine zur Direktmessung geeignete Messstelle im Heizkreislauf oder Kühlkreislauf vorhanden ist, gegebenenfalls unter Verwendung einer entsprechenden, in der Speichereinheit gespeicherten Korrekturkennlinie für die Direktmessung.

Vorzugsweise sind in der Speichereinheit eine Mehrzahl von Korrekturkennlinien für unterschiedliche Tauchhülsen gespeichert. Auf diese Weise ist bei Verwendung einer der Tauchhülsen vor Beginn der Temperaturmessung die der jeweils verwendeten Tauchhülse zugeordnete Korrekturkennlinie auswählbar. Dadurch ist die Vorrichtung mit verschiedenen Tauchhülsen verwendbar und es ist jederzeit eine exakte Temperaturmessung sichergestellt. Die Auswahl der jeweiligen Korrekturkennlinie kann dabei durch einen Bediener direkt vor Ort erfolgen. Auf diese Weise ist die Vorrichtung nicht nur für eine spezielle Messstelle eines speziellen Heizkreislaufs oder Kühlkreislaufs verwendbar, sondern für eine Vielzahl verschiedener Messstellen unterschiedlicher Heizkreisläufe oder Kühlkreisläufe, in welchen jeweils unterschiedliche Tauchhülsen installiert sein können oder welche auch für eine Direktmessung geeignet sein können. Dazu ist lediglich vor, während oder unmittelbar nach der Installation der Vorrichtung am jeweiligen Heizkreislauf oder Kühlkreislauf die Korrekturkennlinie auszuwählen, welche für die jeweils im Heizkreislauf bzw. Kühlkreislauf fest installierte Tauchhülse, in welche der jeweilige Temperatursensor einzusetzen bzw. bereits eingesetzt ist, geeignet ist, oder es ist die Direktmessung auszuwählen, wenn der jeweilige Temperatursensor direkt in das Medium einzusetzen bzw. bereits eingesetzt ist.

Es sind jedoch in der Speichereinheit zweckmäßigerweise nur Korrekturkennlinien für die Tauchhülsen gespeichert, welche mit dem Temperatursensor der Vorrichtung verwendbar sind. Der mit der Vorrichtung ab Werk gekoppelte Temperatursensor weist einen bestimmten Durchmesser auf, so dass mit dem jeweiligen Temperatursensor nur Tauchhülsen verwendbar sind, welche einen ausreichend großen Innendurchmesser aufweisen, um den Temperatursensor aufnehmen zu können. Daher ist die Speicherung von Korrekturkennlinien, welche mit dem jeweiligen Temperatursensor nicht verwendbar sind, unnötig und würde eine Bedienung, d. h. eine korrekte Auswahl der für die jeweilige Tauchhülse benötigten Korrekturkennlinie unnötig verkomplizieren. Die jeweilige Korrekturkennlinie kann alternativ auch ab Werk bereits fest vorgegeben sein, falls beispielsweise vor einer Auslieferung der Vorrichtung bereits feststeht, in welche Tauchhülse ein Käufer der Vorrichtung den Temperatursensor einsetzen möchte.

Ist der Temperatursensor bereits ab Werk fest in der Vorrichtung installiert, beispielsweise bei einem Wärmemengenzähler im Gehäuse des Volumenmessteils, wobei die Messstelle zur Direktmessung vorgesehen ist, so kann für diesen Temperatursensor die Direktmessung bereits ab Werk fest vorgegeben sein, entweder ohne Korrekturkennlinie oder mit einer für die Direktmessung in diesem Gehäuse vorgesehenen Korrekturkennlinie. Diese Ausführungsform der Vorrichtung ist dann auch zur Ausbildung neuer Messstellen beispielsweise bei einem Neuaufbau eines Heizkreislaufs oder Kühlkreislaufs geeignet, in welchen die Vorrichtung zu integrieren und fest zu installieren ist. Die Vorrichtung kann dann beispielsweise einen zweiten Temperatursensor aufweisen, welcher in einer anderen Messstelle des Heizkreislaufs oder Kühlkreislaufs angeordnet werden kann, wobei die Messstelle zur Direktmessung ausgebildet sein kann oder eine fest im Heizkreislauf oder Kühlkreislauf installierte Tauchhülse aufweisen kann. Für diesen weiteren Temperatursensor können dann, wie bereits beschrieben, wieder entsprechende auszuwählende Korrekturkennlinien in der Vorrichtung gespeichert sein.

Die Vorrichtung ist beispielsweise als ein Wärmemengenzähler für einen Heizkreislauf oder Kühlkreislauf ausgebildet, wobei ein erster Temperatursensor in einem Vorlauf und ein zweiter Temperatursensor in einem Rücklauf des Heizkreislaufs oder Kühlkreislaufs anordbar oder angeordnet sind. Es ist dabei aufgrund der Korrektur des Messfehlers unerheblich, ob die Temperatursensoren symmetrisch oder unsymmetrisch angeordnet sind, d. h. ob beide Temperatursensoren in gleichartigen oder unterschiedlichen Tauchhülsen des Heizkreislaufs oder Kühlkreislaufs angeordnet sind oder lediglich einer der Temperatursensoren in einer Tauchhülse des Heizkreislaufs oder Kühlkreislaufs angeordnet ist oder keine Tauchhülsen verwendet werden, so dass beide Temperatursensoren in einer zur Direktmessung geeigneten Messstelle des Heizkreislaufs oder Kühlkreislaufs direkt im Medium angeordnet sind, so dass mittels beider Temperatursensoren Direktmessungen durchführbar sind. Die Vorrichtung kann jedoch auch zur Temperaturmessung von anderen Medien ausgebildet sein, welche sich in einer Rohrleitung oder in einem Behälter mit zumindest einer fest installierten Tauchhülse befinden.

Dabei ist für jeden Temperatursensor eine der jeweiligen Tauchhülse entsprechende Korrekturkennlinie aus der Speichereinheit auswählbar bzw. eine Direktmessung mit oder ohne einer für die Direktmessung vorgesehenen Korrekturkennlinie einstellbar, wenn der jeweilige Temperatursensor direkt im Medium angeordnet ist, ohne die Verwendung einer Tauchhülse. Dadurch sind in allen möglichen Varianten mittels der Vorrichtung korrekte Temperaturmessungen und dadurch korrekte Wärmemengenerfassungen sichergestellt.

In einem Verfahren zum Betrieb der Messanordnung zur Temperaturmessung wird, wenn in der Vorrichtung eine Mehrzahl von Korrekturkennlinien für unterschiedliche Tauchhülsen gespeichert sind, vor Beginn der Temperaturmessung bei Verwendung einer der Tauchhülsen die der jeweils verwendeten Tauchhülse zugeordnete Korrekturkennlinie ausgewählt, oder es wird eine Direktmessung ausgewählt, wenn ein jeweiliger Temperatursensoren direkt in ein Medium, dessen Temperatur zu messen ist, eintauchbar oder eingetaucht ist. Dadurch ist die Vorrichtung mit verschiedenen Tauchhülsen verwendbar, wobei mittels des Verfahrens zur Temperaturmessung jederzeit und mit einem sehr geringen Aufwand eine exakte Temperaturmessung ermöglicht wird.

Auf diese Weise ist die Vorrichtung nicht nur für eine spezielle Messstelle eines speziellen Heizkreislaufs oder Kühlkreislaufs verwendbar, sondern für eine Vielzahl verschiedener Messstellen unterschiedlicher Heizkreisläufe oder Kühlkreisläufe, in welchen jeweils unterschiedliche Tauchhülsen installiert sein können oder welche auch für eine Direktmessung geeignet sein können.

Zweckmäßigerweise wird bei einer Mehrzahl mit der Vorrichtung gekoppelter Temperatursensoren, d. h. wenn die Vorrichtung eine Mehrzahl von Temperatursensoren aufweist, für jeden der Temperatursensoren vor Beginn der Temperaturmessung bei Verwendung einer Tauchhülse die der jeweils verwendeten Tauchhülse entsprechende Korrekturkennlinie ausgewählt oder es wird die Direktmessung ausgewählt, wenn der jeweilige Temperatursensor direkt in das Medium eintauchbar oder eingetaucht ist. Wird für einen Temperatursensor keine Tauchhülse verwendet, d. h. dieser Temperatursensor taucht direkt in das Medium ein, wird kein Messfehler durch eine Tauchhülse verursacht. Daher ist keine Korrekturkennlinie zur Korrektur der Messwerte erforderlich. Wird bei der Direktmessung jedoch durch andere Faktoren ein Messfehler verursacht, so kann auch für die Direktmessung eine entsprechende Korrekturkennlinie vorgesehen sein, welche durch die Anwahl der Direktmessung ausgewählt wird.

Wärmezähler oder Kältezähler weisen üblicherweise zwei Temperatursensoren auf, wobei ein erster Temperatursensor in einem Vorlauf und ein zweiter Temperatursensor in einem Rücklauf des Heizkreislaufs oder Kühlkreislaufs angeordnet ist. Dabei können beispielsweise beide Temperatursensoren in gleichartigen oder unterschiedlichen Tauchhülsen des Heizkreislaufs oder Kühlkreislaufs angeordnet sein oder lediglich einer der Temperatursensoren ist in einer Tauchhülse des Heizkreislaufs oder Kühlkreislaufs angeordnet oder es werden keine Tauchhülsen verwendet, so dass beide Temperatursensoren in einer zur Direktmessung geeigneten Messstelle des Heizkreislaufs oder Kühlkreislaufs direkt im Medium angeordnet sind und mittels beider Temperatursensoren Direktmessungen durchgeführt werden. In allen möglichen Varianten sind mittels des Verfahrens und der Messanordnung mit der Vorrichtung zur Temperaturmessung und mittels des Verfahrens zum Betrieb der Messanordnung bei allen mit der Vorrichtung gekoppelten Temperatursensoren korrekte Temperaturmessungen und dadurch eine korrekte Wärmemengenerfassung sichergestellt.

Dabei kann auch bei für die Direktmessung eine entsprechende für die Direktmessung vorgesehene Korrekturkennlinie vorgesehen sein, welche bei Anwahl der Direktmessung ausgewählt wird. Auf diese Weise ist beispielsweise ein Messfehler korrigierbar, welcher durch eine Temperaturableitung eines Kugelhahns oder eines Volumenmessteils eines Wärmemengenzählers verursacht wird. Bei Wärmemengenzählern, welche eine derartige Direktmessung ermöglichen, d. h. ohne Tauchhülsen, ist beispielsweise ein Temperatursensor in einem Kugelhahn angeordnet, welcher in einem Vorlauf des Heizkreislaufs oder Kühlkreislaufs installiert ist und ein weiterer Temperatursensor ist in einem Gehäuse des Volumenmessteils des Wärmezählers angeordnet. Mittels des Volumenmessteils wird eine Durchflussmenge des Medium bestimmt.

Bei dieser Anordnung können beispielsweise Messfehler aufgrund eines sehr unterschiedlichen mechanischen Umfeldes der beiden Temperatursensoren auftreten, welche mit entsprechenden Korrekturkennlinien zu korrigieren sind. Der Kugelhahn verursacht beispielsweise aufgrund einer geringen Masse einen kleinen Wärme-Ableit-Fehler, während das Gehäuse des Volumenmessteils aufgrund einer großen Masse einen entsprechend größeren Wärme-Ableit-Fehler verursacht. Durch eine derartige Korrekturkennlinie auch für die Direktmessung ist auch bei einer Direktmessung eine Genauigkeit der Temperaturmessung verbessert.

In einer vorteilhaften Ausführungsform wird ein Zeitpunkt der Auswahl der Korrekturkennlinie für den jeweiligen Temperatursensor bei Verwendung einer Tauchhülse oder der Auswahl der Direktmessung mit oder ohne einer dafür vorgesehenen Korrekturkennlinie für den jeweiligen Temperatursensor, wenn dieser direkt im Medium eintauchbar oder eingetaucht ist, in der Vorrichtung gespeichert. Dadurch kann jederzeit nachvollzogen werden, wann die Auswahl vorgenommen wurde. Auf diese Weise kann jederzeit überprüfbar sichergestellt werden, dass die Temperaturmessungen ab dem Zeitpunkt der Auswahl korrekt waren, so dass beispielsweise korrekte Abrechnungen eines Wärmemengenverbrauchs erstellt werden können.

Um fehlerhafte Temperaturmessungen, welche beispielsweise aus einer nicht durchgeführten oder fehlerhaften Bedienung der Vorrichtung resultieren, von vornherein auszuschließen, wird die Temperaturmessung zweckmäßigerweise erst gestartet, nachdem für jeden verwendeten Temperatursensor eine Korrekturkennlinie oder die Direktmessung ausgewählt wurde.

Vorteilhafterweise wird die Auswahl der Korrekturkennlinien oder der Direktmessung für den jeweiligen Temperatursensor durch Eingabe eines Passwortes freigeschaltet. Dadurch ist die jeweilige Auswahl gegen unbefugte Veränderungen gesichert. Auf diese Weise ist ein fahrlässig oder vorsätzlich verursachtes Verändern der Auswahl der Korrekturkennlinie oder der Direktmessung und dadurch eine Verfälschung von Temperaturmessungen und daraus resultierend von ermittelten Wärmemengen verhindert. Dies stellt beispielsweise korrekte Abrechnungen verbrauchter Wärmemengen jederzeit sicher.

Ausführungsbeispiele der Erfindung werden im Folgenden anhand von Zeichnungen näher erläutert.

Darin zeigen:
- Figur 1: eine schematische Darstellung einer Vorrichtung zur Temperaturmessung, und
- Figur 2: eine schematische Darstellung eines Ablaufs einer Auswahl einer Korrekturkennlinie.

Einander entsprechende Teile sind in allen Figuren mit den gleichen Bezugszeichen versehen.

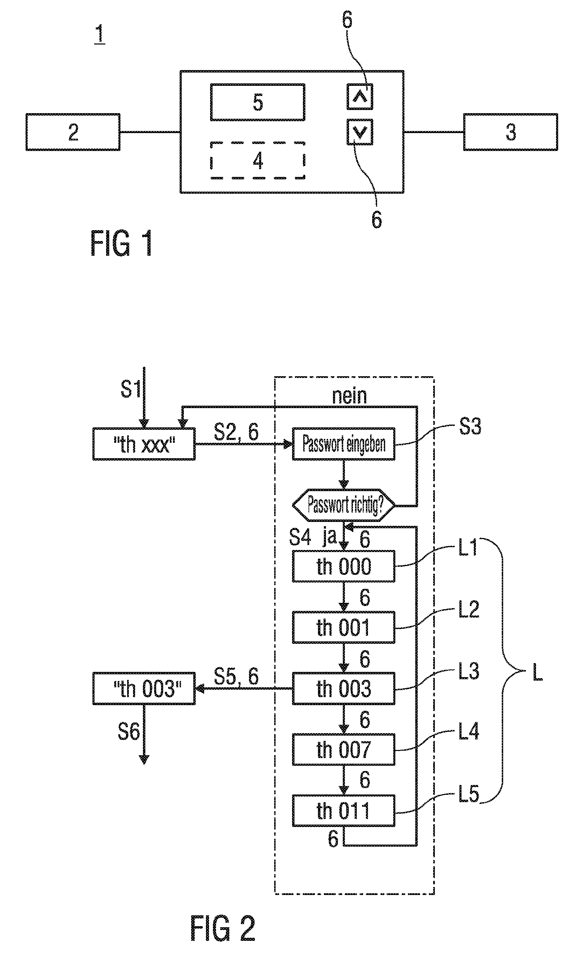

Figur 1 zeigt eine schematische Darstellung einer Vorrichtung 1 zur Temperaturmessung, welche Bestandteil einer Messanordnung zur Temperaturmessung ist, mittels welcher ein Verfahren zur Temperaturmessung durchführbar ist. Die Vorrichtung 1 ist beispielsweise als ein Wärmemengenzähler, d. h. als ein so genannter Wärmezähler oder Kältezähler ausgebildet. Wärmezähler sind beispielsweise in einem Heizkreislauf einer Heizung installiert, um einen Wärmemengenverbrauch zum Beispiel zu Abrechnungszwecken zu ermitteln. Kältezähler sind beispielsweise in einem Kühlkreislauf einer Klimaanlage installiert, um einen negativen Wärmemengenverbrauch, d. h. einen Kühlmengenverbrauch zum Beispiel zu Abrechnungszwecken zu ermitteln.

Die Vorrichtung 1 weist einen ersten Temperatursensor 2 und einen zweiten Temperatursensor 3 auf. Der erste Temperatursensor 2 ist in einen Vorlauf und der zweite Temperatursensor 3 in einen Rücklauf beispielsweise des Heizkreislaufs der Heizung installierbar.

Dabei werden die Temperatursensoren 2, 3 entweder derart installiert, dass sie direkt in ein Medium, dessen Temperatur zu messen ist, eintauchen, oder indirekt über eine Tauchhülse, d. h. der jeweilige Temperatursensor 2, 3 wird in der Tauchhülse angeordnet, welche in das Medium eintaucht. In einer Heizungsanlage ist dieses Medium üblicherweise Wasser und in einer Klimaanlage ein Kühlmedium.

Dabei ist die Tauchhülse oder sind die Tauchhülsen als ein fest installierter Bestandteil einer bereits bestehenden Messstelle in dem bereits bestehenden Heizkreislauf der Heizung oder in dem bereits bestehenden Kühlkreislauf der Klimaanlage angeordnet, d. h. die Tauchhülse oder Tauchhülsen ist/sind ein fester Bestandteil des bereits bestehenden Heizkreislaufs der Heizung bzw. des bereits bestehenden Kühlkreislaufs der Klimaanlage und fest in diesem installiert. Durch ein Entfernen der Tauchhülse oder Tauchhülsen aus dem Heizkreislauf der Heizung bzw. aus dem Kühlkreislauf der Klimaanlage würde eine Öffnung in dem jeweiligen Kreislauf entstehen, durch welche hindurch das Medium aus dem jeweiligen Kreislauf entweichen würde. Die Tauchhülse oder Tauchhülsen ist/sind somit ein Bestandteil des Heizkreislaufs oder Kühlkreislaufs und kein Bestandteil der Vorrichtung 1, sondern ein Bestandteil der Messanordnung, welche die Vorrichtung 1 und die Tauchhülse oder Tauchhülsen umfasst.

Werden die Temperatursensoren 2, 3 in Tauchhülsen angeordnet, so wird durch die Tauchhülse während der Temperaturmessung ein Messfehler verursacht, ein so genannter Wärme-Ableit-Fehler oder Temperatur-Ableit-Fehler. Der Messfehler resultiert beispielsweise aus einer Wärmeableitung vom Temperatursensor 2, 3 weg, verursacht durch ein Material der Tauchhülse.

Zur Korrektur dieses Messfehlers sind in einer Speichereinheit 4 der Vorrichtung 1 eine Mehrzahl von Korrekturkennlinien gespeichert. Die Korrekturkennlinien, welche linear oder nicht linear verlaufen können, sind auf die Tauchhülsen, in welche die Temperatursensoren 2, 3 der Vorrichtung 1 eingesetzt werden können, abgestimmt.

Durch die Verwendung einer für die jeweilige Tauchhülse passenden Korrekturkennlinie im Verfahren zur Temperaturmessung wird der während der Temperaturmessung auftretende Messfehler in ermittelten Temperaturmesswerten, welcher durch die Tauchhülse verursacht wird, in einer nicht näher dargestellten Verarbeitungseinheit der Vorrichtung 1 korrigiert. Dadurch ist auch bei der Verwendung von Tauchhülsen eine exakte Temperaturmessung ermöglicht, wodurch eine Messgenauigkeit des Wärmezählers erhöht wird.

Auf diese Weise sind die fest im Heizkreislauf oder Kühlkreislauf installierten Tauchhülsen weiterhin verwendbar und es müssen beispielsweise bereits bestehende Messstellen im jeweiligen Heizkreislauf oder Kühlkreislauf nicht umgerüstet werden. Das Verfahren und die Messanordnung zur Temperaturmessung mit der Vorrichtung 1 zur Temperaturmessung ermöglichen somit eine umweltfreundliche und kostengünstige Lösung, um korrekte Temperaturmessungen sicherzustellen. Eine Veränderung am Heizkreislauf oder Kühlkreislauf selbst ist auf diese Weise nicht erforderlich. D. h., da die fest installierten Tauchhülsen, welche fester Bestandteil des bereits bestehenden Heizkreislaufs oder Kühlkreislaus sind, weiterhin verwendbar sind und nicht ausgetauscht werden müssen, ist es beispielsweise nicht erforderlich, den Heizkreislauf oder Kühlkreislauf zu entleeren, um die Tauchhülsen ohne ein Ausströmen des Mediums aus diesem entfernen zu können, und den Heizkreislauf oder Kühlkreislauf aufwändig und kostenintensiv umzubauen, um eine Temperaturmessung ohne Tauchhülsen zu ermöglichen.

Des Weiteren weist die Vorrichtung 1 eine Anzeigeeinheit 5 und zwei Tasten 6 auf, um je nach verwendeter Tauchhülse, d. h. je nachdem, in welche im Heizkreislauf oder Kühlkreislauf fest installierte jeweilige Tauchhülse der jeweilige Temperatursensoren 2, 3 einzusetzen ist, eine entsprechende Korrekturkennlinie auswählen zu können.

Figur 2 zeigt schematisch einen Ablauf der Auswahl einer Korrekturkennlinie, welcher in einem Verfahren zum Betrieb der Messanordnung für den ersten Temperatursensor 2, welcher in einer fest installierten Tauchhülse im Vorlauf des Heizkreislaufes angeordnet werden soll, durchgeführt wird. Der Ablauf zur Auswahl der Korrekturkennlinie für den zweiten Temperatursensor 3 läuft im Verfahren zum Betrieb der Messanordnung analog ab.

In einem ersten Schritt S1 wird die Auswahl für den ersten Temperatursensor 2 aufgerufen. Nachdem eine Anzeige "th xxx" zur Einstellung für den ersten Temperatursensor 2 in der Anzeigeeinheit 5 erscheint, sind in einem zweiten Schritt S2 beide Tasten 6 gleichzeitig zu betätigen. Daraufhin wird in der Anzeigeeinheit 5 ein Passwort abgefragt, welches in einem dritten Schritt S3 einzugeben ist.

Durch das Passwort wird die Auswahl der Korrekturkennlinien für die verwendete Tauchhülse oder der Direktmessung für den jeweiligen Temperatursensor 2, 3 autorisiert und gegen unbefugte Veränderungen gesichert. Auf diese Weise wird ein fahrlässig oder vorsätzlich verursachtes Verändern der Auswahl der Korrekturkennlinie für die verwendete Tauchhülse oder der Direktmessung und dadurch eine Verfälschung von Temperaturmessungen und daraus resultierend von ermittelten Wärmemengen verhindert, so dass beispielsweise korrekte Abrechnungen verbrauchter Wärmemengen jederzeit sichergestellt sind.

Das Passwort ist beispielsweise mittels der beiden Tasten 6 eingebbar und durch gleichzeitiges Betätigen der beiden Tasten 6 zu bestätigen oder das Passwort ist mittels weiterer, hier nicht dargestellter Eingabeelemente einzugeben. Wird das Passwort nicht korrekt eingegeben, ist keine Auswahl der Korrekturkennlinien für die verwendete Tauchhülse oder der Direktmessung möglich, so dass mit dem zweiten Schritt S2, d. h. der Betätigung beider Tasten 6 fortgefahren werden muss, um erneut das Passwort eingeben zu können.

Ist das Passwort korrekt, kann in einem vierten Schritt S4 mittels der beiden Tasten 6 durch Listeneinträge L1 bis L5 in einer Liste L der in der Speichereinheit 4 gespeicherten Korrekturkennlinien für die jeweiligen Tauchhülsen geblättert werden und einer der Listeneinträge L1 bis L5 ausgewählt werden. Wird bis zum Ende der Liste L durchgeblättert, ohne einen Listeneintrag L1 bis L5 auszuwählen, gelangt man zum ersten Listeneintrag L1 zurück.

Bei Auswahl des ersten Listeneintrages L1, gekennzeichnet durch die Anzeige "th 000" in der Anzeigeeinheit 5, würde für den ersten Temperatursensor 2 die Direktmessung ausgewählt werden, d. h. die Temperaturmessung mittels des ersten Temperatursensors 2 würde ohne eine Korrekturkennlinie durchgeführt. Diese Direktmessung würde ausgewählt, wenn der erste Temperatursensor 2 direkt in das Medium eingetaucht würde, ohne Verwendung einer Tauchhülse. Aufgrund dessen würden keine Messfehler von einer Tauchhülse verursacht, so dass keine Korrekturkennlinie zur Korrektur ermittelter Temperaturmesswerte erforderlich wäre.

Alternativ kann auch für die Direktmessung eine entsprechende Korrekturkennlinie in der Speichereinheit 4 gespeichert sein, welche durch Auswahl des ersten Listeneintrags L1 ausgewählt würde. Auf diese Weise ist beispielsweise ein Messfehler korrigierbar, welcher durch eine Temperaturableitung eines Kugelhahns oder eines Volumenmessteils des Wärmemengenzählers verursacht wird. Bei derartigen Wärmemengenzählern, welche eine derartige Direktmessung ermöglichen, d. h. ohne Tauchhülsen, ist beispielsweise der erste Temperatursensor 2 in einem Kugelhahn angeordnet, welcher in einem Vorlauf des Heizkreislaufs oder Kühlkreislaufs installiert ist und der zweite Temperatursensor 3 ist in einem Gehäuse des Volumenmessteils des Wärmemengenzählers angeordnet. Mittels des Volumenmessteils wird eine Durchflussmenge des Medium bestimmt.

Bei dieser Anordnung können beispielsweise Messfehler aufgrund eines sehr unterschiedlichen mechanischen Umfeldes der beiden Temperatursensoren 2, 3 auftreten, welche mit entsprechenden Korrekturkennlinien zu korrigieren sind. Der Kugelhahn verursacht beispielsweise aufgrund einer geringen Masse einen kleinen Wärme-Ableit-Fehler, während das Gehäuse des Volumenmessteils aufgrund einer großen Masse einen entsprechend größeren Wärme-Ableit-Fehler verursacht. Durch eine derartige Korrekturkennlinie auch für die Direktmessung ist auch bei einer Direktmessung eine Genauigkeit der Temperaturmessung verbessert.

Mittels der weiteren Listeneinträge L2 bis L5 sind Korrekturkennlinien für verschiedene Tauchhülsen auswählbar. Im hier dargestellten Beispiel sind in der Speichereinheit 4 vier Korrekturkennlinien für Tauchhülsen gespeichert, so dass in der Liste L vier Listeneinträge L2 bis L5 zu Korrekturkennlinien für die entsprechenden Tauchhülsen verfügbar sind.

Weitere Korrekturkennlinien für weitere Tauchhülsen sind nicht gespeichert, da diese Tauchhülsen mit den Temperatursensoren 2, 3 der Vorrichtung 1 nicht verwendet werden können. D. h. in der Speichereinheit 4 der Vorrichtung 1 sind nur die Korrekturkennlinien für die Tauchhülsen gespeichert, in welche die Temperatursensoren 2, 3 der Vorrichtung 1 eingesetzt werden können.

Die mit der Vorrichtung 1 ab Werk gekoppelten Temperatursensoren 2, 3 weisen beispielsweise einen bestimmten Durchmesser auf, so dass mit dem jeweiligen Temperatursensor 2, 3 nur Tauchhülsen verwendbar sind, welche einen ausreichend großen Innendurchmesser aufweisen, um den jeweiligen Temperatursensor 2, 3 aufnehmen zu können. Daher ist die Speicherung von Korrekturkennlinien, welche mit dem jeweiligen Temperatursensor 2, 3 nicht verwendbar sind, unnötig und würde eine Bedienung, d. h. eine korrekte Auswahl der für die jeweilige Tauchhülse benötigten Korrekturkennlinie unnötig verkomplizieren.

Im hier dargestellten Beispiel wird bis zum dritten Listeneintrag L3 durchgeblättert, gekennzeichnet durch die Anzeige "th 003" in der Anzeigeeinheit 5. Dieser dritte Listeneintrag L3 steht für eine in der Speichereinheit 4 gespeicherte Korrekturkennlinie für eine Tauchhülse, welche sich in dem hier beschriebenen Ausführungsbeispiel im Vorlauf des Heizkreislaufes befindet, d. h. welche als dessen Bestandteil fest in diesem angeordnet ist, und in welche der erste Temperatursensor 2 eingesetzt werden soll.

Der dritte Listeneintrag L3 wird in einem fünften Schritt S5 durch gleichzeitiges Betätigen der beiden Tasten 6 bestätigt. Dadurch ist die diesem dritten Listeneintrag L3 zugeordnete und in der Speichereinheit 4 gespeicherte Korrekturkennlinie für das Verfahren zur Temperaturmessung ausgewählt. D. h. die mittels des ersten Temperatursensors 2 im Verfahren zur Temperaturmessung ermittelten Temperaturmesswerte werden mittels der ausgewählten Korrekturkennlinie korrigiert, so dass der durch die verwendete Tauchhülse verursachte Messfehler eliminiert wird.

In einem sechsten Schritt S6 kann nun in die Auswahl einer geeigneten Korrekturkennlinie für den zweiten Temperatursensor 3 weitergeschaltet werden, welche analog zu der geschilderten Auswahl für den ersten Temperatursensor 2 abläuft. Dadurch kann auch für den zweiten Temperatursensor 3, welcher im Rücklauf des Heizkreislaufes angeordnet werden soll, die Direktmessung ausgewählt werden, wenn er ohne Verwendung einer Tauchhülse direkt in das Medium eintaucht, oder es kann bei Verwendung einer fest im Rücklauf des Heizkreislaufs installierten Tauchhülse eine entsprechende für die Tauchhülse geeignete Korrekturkennlinie ausgewählt werden. Auch bei der Auswahl der Direktmessung kann, wie bereits erwähnt, eine für die Direktmessung vorgesehene Korrekturkennlinie in der Speichereinheit 4 gespeichert sein, welche dann bei Anwahl der Direktmessung ausgewählt wird.

Das hier beschriebene Verfahren zum Betrieb der Messanordnung, d. h. die Auswahl der Direktmessung oder der Korrekturkennlinie für die jeweils verwendete Tauchhülse kann anstatt der Tasten an der Vorrichtung beispielsweise auch über eine hier nicht dargestellte Kommunikationsschnittstelle der Vorrichtung 1 durchgeführt werden. Die Kommunikationsschnittstelle ist beispielsweise eine Infrarotdatenschnittstelle, zum Beispiel eine so genannte IrDA-Schnittstelle.

Alternativ kann diese Kommunikationsschnittstelle beispielsweise auch eine drahtgebundene Kommunikationsschnittstelle oder eine Funkschnittstelle sein, zum Beispiel eine Mobilfunk-, Bluetooth- oder W-LAN-Schnittstelle. Auf diese Weise ist die Auswahl der Korrekturkennlinie für die jeweils verwendete Tauchhülse, in welche der jeweilige Temperatursensor 2, 3 eingesetzt wird oder eingesetzt ist, oder die Auswahl der Direktmessung für den jeweiligen Temperatursensor 2, 3, wodurch keine Korrekturkennlinie oder gegebenenfalls eine für die Direktmessung in der Speichereinheit 4 gespeicherte Korrekturkennlinie ausgewählt wird, beispielsweise mittels einer externen und über die Kommunikationsschnittstelle mit der Vorrichtung verbundenen Einheit durchführbar, zum Beispiel mittels eines tragbaren Computers oder über eine Zentralstelle beispielsweise eines Energieversorgungsunternehmens, welche ohnehin zur Datenerfassung und Auswertung mit der Vorrichtung 1 verbunden ist.

Durch die Möglichkeit der Auswahl der Korrekturkennlinien für die jeweils verwendete Tauchhülse oder der Direktmessung für die beiden Temperatursensoren 2, 3, gegebenenfalls mit einer für die Direktmessung vorgesehenen Korrekturkennlinie, können die Vorrichtung 1 und das Verfahren zur Temperaturmessung für verschiedene Kombinationen von Messstellen verwendet werden, welche unterschiedliche Tauchhülsen aufweisen oder als Messstelle für eine Direktmessung ausgebildet sein können. Es ist dabei unerheblich, ob die Temperatursensoren 2, 3 symmetrisch oder unsymmetrisch angeordnet sind. D. h. es können beispielsweise beide Temperatursensoren 2, 3 in gleichartigen oder unterschiedlichen Tauchhülsen des Heizkreislaufs oder Kühlkreislaufs angeordnet sein oder lediglich einer der Temperatursensoren 2, 3 ist in einer Tauchhülse des Heizkreislaufs oder Kühlkreislaufs angeordnet oder es werden keine Tauchhülsen verwendet, so dass beide Temperatursensoren 2, 3 in einer zur Direktmessung geeigneten Messstelle des Heizkreislaufs oder Kühlkreislaufs direkt im Medium angeordnet sind und mittels beider Temperatursensoren 2, 3 Direktmessungen durchgeführt werden. In allen möglichen Varianten sind mittels des Verfahrens und der Messanordnung mit der Vorrichtung 1 zur Temperaturmessung und mittels des Verfahrens zum Betrieb der Messanordnung korrekte Temperaturmessungen und dadurch eine korrekte Wärmemengenerfassung sichergestellt.
Um fehlerhafte Temperaturmessungen, welche beispielsweise aus einer nicht durchgeführten oder fehlerhaften Bedienung der Vorrichtung 1 bei der Auswahl der Korrekturkennlinien für die jeweils verwendete Tauchhülse oder der Direktmessung für die Temperatursensoren 2, 3 resultieren, von vornherein auszuschließen, wird die Temperaturmessung vorteilhafterweise erst gestartet, nachdem für jeden verwendeten Temperatursensor 2, 3 eine Korrekturkennlinie für die jeweils verwendete Tauchhülse oder die Direktmessung ausgewählt wurde, d. h. die Vorrichtung 1 blockiert bis dahin die Temperaturmessung und/oder eine Energiemessung, d. h. eine Wärmemengenbestimmung, so dass keine Temperaturmesswerte erfasst werden können und/oder keine Energie- oder Wärmemengenmesswerte erfasst werden können.

Alternativ oder zusätzlich wird vorteilhafterweise ein Zeitpunkt der Auswahl der Korrekturkennlinie für die verwendete Tauchhülse oder der Direktmessung für die Temperatursensoren 2, 3 in der Vorrichtung 1 gespeichert, zweckmäßigerweise in der Speichereinheit 4. Dadurch kann jederzeit nachvollzogen werden, wann die Auswahl vorgenommen wurde. Auf diese Weise kann jederzeit überprüfbar sichergestellt werden, dass die Temperaturmessungen ab dem Zeitpunkt der Auswahl korrekt waren, so dass beispielsweise korrekte Abrechnungen eines Wärmemengenverbrauchs erstellt werden können.

Alternativ zu der in Figur 2 dargestellten Auswahl können die jeweiligen Korrekturkennlinien für die Temperatursensoren 2, 3 oder zumindest eine Korrekturkennlinie für einen der beiden Temperatursensoren 2, 3 auch bereits ab Werk fest vorgegeben sein, falls beispielsweise vor einer Auslieferung der Vorrichtung 1 bereits feststeht, in welche Tauchhülse ein Käufer der Vorrichtung 1 den betreffenden Temperatursensor 2, 3 oder in welche Tauchhülsen er beide Temperatursensoren 2, 3 einsetzen möchte. Ist von vornherein eine Direktmessung vorgesehen, kann auch diese bereits ab Werk fest vorgegeben sein, wodurch keine Korrekturkennlinie oder eine für die Direktmessung vorgesehene Korrekturkennlinie verwendet wird.

### BEZUGSZEICHENLISTE

- 1: Vorrichtung
- 2: erster Temperatursensor
- 3: zweiter Temperatursensor
- 4: Speichereinheit
- 5: Anzeigeeinheit
- 6: Tasten

- L: Liste
- L1: erster Listeneintrag
- L2: zweiter Listeneintrag
- L3: dritter Listeneintrag
- L4: vierter Listeneintrag
- L5: fünfter Listeneintrag

- S1: erster Schritt
- S2: zweiter Schritt
- S3: dritter Schritt
- S4: vierter Schritt
- S5: fünfter Schritt
- S6: sechster Schritt

## Patentansprüche

1. Verfahren zur Temperaturmessung mittels einer Vorrichtung (1) mit zumindest einem Temperatursensor (2, 3) nach einem der Ansprüche 8 bis 10, wobei der Temperatursensor (2, 3) indirekt über eine Tauchhülse, welche als ein fest installierter Bestandteil einer bereits bestehenden Messstelle in einem bereits bestehenden Heizkreislauf einer Heizung oder in einem bereits bestehenden Kühlkreislauf einer Klimaanlage angeordnet ist, oder direkt in ein Medium, dessen Temperatur zu messen ist, eingetaucht wird, wobei bei Verwendung der Tauchhülse ein durch die Tauchhülse während der Temperaturmessung verursachter Messfehler über eine in der Vorrichtung (1) gespeicherte Korrekturkennlinie korrigiert wird.

2. Verfahren nach Anspruch 1,
**dadurch gekennzeichnet, dass** bei einer Direktmessung mittels des direkt in das Medium eingetauchten Temperatursensors (2, 3) keine Korrekturkennlinie verwendet wird.

3. Verfahren nach einem der vorhergehenden Ansprüche,
**dadurch gekennzeichnet, dass** in der Vorrichtung (1) eine Mehrzahl von Korrekturkennlinien für unterschiedliche Tauchhülsen gespeichert sind und vor Beginn der Temperaturmessung bei Verwendung einer der Tauchhülsen die der jeweils verwendeten Tauchhülse zugeordnete Korrekturkennlinie ausgewählt wird oder eine Direktmessung ausgewählt wird, wenn ein jeweiliger Temperatursensoren (2, 3) direkt in ein Medium, dessen Temperatur zu messen ist, eintauchbar oder eingetaucht ist.

4. Verfahren nach einem der vorhergehenden Ansprüche,
**dadurch gekennzeichnet, dass** bei einer Mehrzahl mit der Vorrichtung (1) gekoppelter Temperatursensoren (2, 3) für jeden der Temperatursensoren (2, 3) vor Beginn der Temperaturmessung bei Verwendung einer Tauchhülse die der jeweils verwendeten Tauchhülse entsprechende Korrekturkennlinie ausgewählt wird oder die Direktmessung ausgewählt wird, wenn der jeweilige Temperatursensoren (2, 3) direkt in das Medium eintauchbar oder eingetaucht ist.

5. Verfahren nach einem der vorhergehenden Ansprüche,
**dadurch gekennzeichnet, dass** ein Zeitpunkt der Auswahl der Korrekturkennlinie für den jeweiligen Temperatursensor (2, 3) bei Verwendung einer Tauchhülse oder der Auswahl der Direktmessung für den jeweiligen Temperatursensor (2, 3), wenn dieser direkt im Medium eintauchbar oder eingetaucht ist, in der Vorrichtung (1) gespeichert wird.

6. Verfahren nach einem der vorhergehenden Ansprüche,
**dadurch gekennzeichnet, dass** die Temperaturmessung erst gestartet wird, nachdem für jeden verwendeten Temperatursensor (2, 3) eine Korrekturkennlinie oder die Direktmessung ausgewählt wurde.

7. Verfahren nach einem der vorhergehenden Ansprüche,
**dadurch gekennzeichnet, dass** die Auswahl der Korrekturkennlinien oder der Direktmessung für den jeweiligen Temperatursensor (2, 3) durch Eingabe eines Passwortes freigeschaltet wird.

8. Vorrichtung (1) mit zumindest einem Temperatursensor (2, 3), welche geeignet ist zur Temperaturmessung eines Mediums in einem Heizkreislauf einer Heizung oder in einem Kühlkreislauf einer Klimaanlage,
**dadurch gekennzeichnet, dass** der Temperatursensor (2, 3) sowohl indirekt über eine Tauchhülse, welche als ein fest installierter Bestandteil einer bereits bestehenden Messstelle in einem bereits bestehenden Heizkreislauf einer Heizung oder in einem bereits bestehenden Kühlkreislauf einer Klimaanlage angeordnet ist, als auch direkt in ein Medium, dessen Temperatur zu messen ist, eintauchbar ist und dass in einer Speichereinheit (4) der Vorrichtung (1) zumindest eine Korrekturkennlinie gespeichert ist, mittels welcher bei Verwendung einer Tauchhülse ein durch die Tauchhülse während der Temperaturmessung verursachter Messfehler korrigierbar ist.

9. Vorrichtung (1) nach Anspruch 8,
**dadurch gekennzeichnet, dass** in der Speichereinheit (4) nur Korrekturkennlinien für die Tauchhülsen gespeichert sind, welche mit dem Temperatursensor (2, 3) der Vorrichtung (1) verwendbar sind.

10. Vorrichtung (1) nach Anspruch 8 oder 9,
**dadurch gekennzeichnet, dass** die Vorrichtung (1) als ein Wärmemengenzähler für einen Heizkreislauf oder Kühlkreislauf ausgebildet ist, wobei ein erster Temperatursensor (2) in einem Vorlauf und ein zweiter Temperatursensor (3) in einem Rücklauf des Heizkreislaufs oder Kühlkreislaufs anordbar oder angeordnet ist.

## Claims

1. Method for measuring temperature by means of a device (1) having at least one temperature sensor (2, 3) according to any one of the claims 8 to 10, wherein the temperature sensor (2, 3) is immersed indirectly by means of an immersion pocket, which can be arranged as a permanently installed component of an already existing measurement point in an already existing heating circuit of a heating system or in an already existing cooling circuit of an air-conditioning system, or is immersed directly in a medium whose temperature is to be measured, wherein when the immersion pocket is used a measuring error which is caused by the immersion pocket during the measurement of the temperature is corrected by means of a correction characteristic curve stored in the device (1).

2. Method according to Claim 1,
**characterized in that** a correction characteristic curve is not used in the case of direct measurement by means of the temperature sensor (2, 3) which is immersed directly in the medium.

3. Method according to one of the preceding claims, **characterized in that** a multiplicity of correction characteristic curves for different immersion pockets are stored in the device (1), and when one of the immersion pockets is used the correction characteristic curve assigned to the immersion pocket which is respectively being used is selected before the start of the measurement of the temperature, or a direct measurement is selected if a respective temperature sensor (2, 3) can be immersed or is immersed directly into a medium whose temperature is to be measured.

4. Method according to one of the preceding claims, **characterized in that** when there are a multiplicity of temperature sensors (2, 3) which are coupled to the device (1), before the start of the measurement of the temperature for each of the temperature sensors (2, 3), when an immersion pocket is used, the correction characteristic curve which corresponds to the immersion pocket which is respectively being used is selected or the direct measurement is selected if the respective temperature sensor (2, 3) can be immersed or is immersed directly into the medium.

5. Method according to one of the preceding claims, **characterized in that** a time of the selection of the correction characteristic curve for the respective temperature sensor (2, 3) is stored in the device (1) when an immersion pocket is used or when the direct measurement is selected for the respective temperature sensor (2, 3) if the latter can be immersed or is immersed directly in the medium.

6. Method according to one of the preceding claims, **characterized in that** the measurement of the temperature is not started until after a correction characteristic curve or the direct measurement has been selected for each temperature sensor (2, 3) which is used.

7. Method according to one of the preceding claims, **characterized in that** the selection of the correction characteristic curves or the direct measurement for the respective temperature sensor (2, 3) is enabled by inputting a password.

8. Device (1) having at least one temperature sensor (2, 3), which device is suitable for measuring the temperature of a medium in a heating circuit of a heating system or in a cooling circuit of an air-conditioning system,
**characterized in that** the temperature sensor (2, 3) can either be immersed indirectly by means of an immersion pocket, which is arranged as a permanently installed component of an already existing measurement point in an already existing heating circuit of a heating system or in an already existing cooling circuit of an air-conditioning system, or can be immersed directly in a medium whose temperature is to be measured, and **in that** at least one correction characteristic curve is stored in a memory unit (4) of the device (1), by means of which correction characteristic curve it is possible, when an immersion pocket is used, to correct a measuring error which is caused by the immersion pocket during the measurement of the temperature.

9. Device (1) according to Claim 8,
**characterized in that** only correction characteristic curves which can be used with the temperature sensor (2, 3) of the device (1) are stored for the immersion pockets in the memory unit (4).

10. Device (1) according to Claim 8 or 9, **characterized in that** the device (1) is embodied as a heat quantity meter for a heating circuit or cooling circuit, wherein a first temperature sensor (2) can be arranged or is arranged in an out line, and a second temperature sensor (3) can be arranged or is arranged in a return line of the heating circuit or cooling circuit.

## Revendications

1. Procédé de mesure de température au moyen d'un ensemble (1) qui présente au moins un capteur de température (2, 3) selon l'une des revendications 8 á 10,
le capteur de température (2, 3) étant plongé dans un fluide dont la température doit être mesurée, directement ou indirectement par l'intermédiaire d'une douille plongeuse qui est placée comme composant installé fixement d'un emplacement de mesure existant dans un circuit de chauffage existant d'un chauffage ou dans un circuit de refroidissement existant d'une installation de climatisation,
un erreur de mesure provoquée par la douille plongeuse pendant la mesure de température recourant à la douille plongeuse étant corrigée par une ligne caractéristique de correction conservée en mémoire dans l'ensemble (1).

2. Procédé selon la revendication 1, **caractérisé en ce que** lors d'une mesure directe au moyen du capteur de température (2, 3) immergé directement dans le fluide, aucune ligne caractéristique de correction n'est utilisée.

3. Procédé selon l'une des revendications précédentes, **caractérisé en ce que** dans le dispositif (1) sont conservées plusieurs lignes caractéristiques de correction pour différentes douilles plongeuses et **en ce qu'**avant le début de la mesure de température lors de l'utilisation de l'une des douilles plongeuses, la ligne caractéristique de correction associée à la douille plongeuse utilisée est sélectionnée ou une mesure directe est sélectionnée si un capteur de température (2, 3) concerné peut être immergé ou est immergé directement dans le fluide dont la température doit être mesurée.

4. Procédé selon l'une des revendications précédentes, **caractérisé en ce que** lorsque plusieurs capteurs de température (2, 3) sont raccordés à l'ensemble (1), avant le début de la mesure de température pour chacun des capteurs de température (2, 3) lors du recours à une douille plongeuse la ligne caractéristique de correction qui correspond à la douille plongeuse utilisée est sélectionnée, ou la mesure directe est sélectionnée si le capteur de température (2, 3) concerné peut être plongé ou est plongé directement dans le fluide.

5. Procédé selon l'une des revendications précédentes, **caractérisé en ce que** l'instant de la sélection de la ligne caractéristique de correction du capteur de température (2, 3) concerné lors du recours à une douille plongeuse ou la sélection de la mesure directe pour le capteur de température (2, 3) concerné lorsque ce dernier peut être plongé ou est plongé directement dans le fluide est conservé en mémoire dans l'ensemble (1).

6. Procédé selon l'une des revendications précédentes, **caractérisé en ce que** la mesure de température n'est lancée qu'après qu'une ligne de correction ou la mesure directe ont été sélectionnées pour chaque capteur de température (2, 3) utilisé.

7. Procédé selon l'une des revendications précédentes, **caractérisé en ce que** la sélection des lignes caractéristiques de correction ou de la mesure directe est lancée pour chaque capteur de température (2, 3) par introduction d'un mot de passe.

8. Ensemble (1) comportant au moins un capteur de température (2, 3) convenant pour la mesure de la température d'un fluide dans un circuit de chauffage d'un chauffage ou dans un circuit de refroidissement d'une installation de climatisation,
**caractérisé en ce que**
le capteur de température (2, 3) peut être plongé dans un fluide dont la température doit être mesurée, directement ou indirectement par l'intermédiaire d'une douille plongeuse qui peut être placée comme composant installé fixement d'un emplacement de mesure existant dans un circuit de chauffage existant d'un chauffage ou dans un circuit de refroidissement existant d'une installation de climatisation,
et **en ce qu'**au moins une ligne caractéristique de correction au moyen de laquelle l'erreur de mesure provoquée par la douille plongeuse pendant la mesure de température recourant à la douille plongeuse peut être corrigée est conservée dans une unité de mémoire (4) de l'ensemble (1).

9. Ensemble (1) selon la revendication 8, **caractérisé en ce que** seules des lignes caractéristiques de correction pour des douilles plongeuses qui peuvent être utilisées avec le capteur de température (2, 3) de l'ensemble (1) sont conservées dans l'unité de mémoire (4).

10. Ensemble (1) selon les revendications 8 ou 9, **caractérisé en ce que** l'ensemble (1) est configuré comme compteur de chaleur pour un circuit de chauffage ou un circuit de refroidissement, un premier capteur de température (2) étant disposée ou pouvant être disposée dans le départ et un deuxième capteur de température (3) dans le retour du circuit de chauffage ou du circuit de refroidissement.
